# EUROPEAN PATENT SPECIFICATION

(11) **EP 1 305 530 B1**
(45) Date of publication and mention of the grant of the patent: **09.03.2005**
(21) Application number: 01951698.8
(22) Date of filing: 20.07.2001
(51) Int. Cl.: F16C 11/04, F16C 23/02, F16C 33/04, F16C 27/02

(54) **PLAIN BEARINGS**
GLEITLAGER
PALIERS LISSES

(30) Priority: 03.08.2000 GB 0018904
(43) Date of publication of application: 02.05.2003
(73) Proprietor: Glacier Garlock Bearings Inc., Wilmington, Delaware 19801-1120 (US)
(72) Inventor: BLANCHARD, Daniele Dana Glacier Vandervell SA, F-74009 Annecy Cedex (FR); BEAUREPAIRE, Olivier Dana Glacier Vandervell SA, F-74009 Annecy Cedex (FR)
(74) Representative: Boff, James Charles
(86) International application number: PCT/EP2001/008427
(87) International publication number: WO 2002/012740

(56) References cited:
- DE-A- 3 743 086
- DE-U- 8 619 907
- GB-A- 2 321 676
- US-A- 3 881 791
- US-A- 4 795 220
- US-A- 5 609 421
- US-A- 5 611 628

## Description

The present invention relates to plain bearings and particularly to plain bearings which are generally cylindrical in form and wrapped from sheet or strip material.

Wrapped bearings or "bushes" as. they are frequently termed in the bearing art are often used in the hinges of vehicle doors for example. Such bearings are not exposed to high rotational speeds or frequencies but they are subject to high loads imposed by a leverage effect due to the weight of a vehicle door hanging on the hinge when the door is open and otherwise unsupported.

One type of bearing material commonly used for this type of application comprises a strong backing material of steel for example having a lining of a plastics bearing material thereon. Depending upon the type of plastics material there is also frequently a layer of a porous material on the steel into which the plastics material is impregnated in order to promote bonding of the plastics material to the backing. A well known bonding material is a layer of porous bronze powder sintered to the steel backing into which the plastics material is impregnated. The surface of the bonding layer may itself contribute to the bearing properties of the material such as in the known "DU" (Registered Trade Mark) type material which comprises a plastics material of PTFE containing lead impregnated into the bronze, particles of which occur in the bearing running surface. Alternatively, the bonding layer may only constitute a means of adhering the plastics material to the backing and which layer plays no part in the bearing surface properties per se.

In the case of door hinges referred to above, the bearings are operated with no clearance between the bearing bore and the associated hinge pin, i.e. the bearing surface continuously contacts the hinge pin material to form a "zero-clearance" bearing system. This is in order to prevent drooping of the door when opened.

Bearings of the type described must be economic to produce. For this reason, dimensional tolerances on the bushes produced by a bearing manufacturer tend to be quite large and also the tolerances on the bush housing and on the hinge pin which are generally manufactured either by the vehicle builder or another, different supplier, also tend to be quite large, of the order of 60 to 100µm.

In order to accommodate such large tolerances, especially when some combinations of bush, housing and pin tolerances may conspire to provide either an excessively loose fit or an excessively tight fit, it is common practice to push a sizing tool through the bush when it is fitted in the housing to produce a more acceptable reduced tolerance range. This sizing process is commonly known in the art as "burnishing". When the door with hinge pin are fitted to the vehicle, the clearance between the bush and pin must still be zero so, in some circumstances a range of pin diameters must be available to ensure zero clearance. The burnishing operation causes some plastic flow in the lining and bonding layer and this can result in permanent damage to the bush and a shortened life.

To further complicate matters, it is common for the vehicle manufacturer to specify a maximum door hinge opening torque below which the hinge must operate, and therefore, excessively tight hinges cannot be tolerated.

In view of the above problems, manufacturers have sought ways to provide some compliance or resilience to the bearing bushes so that large manufacturing tolerances can be accommodated and so maintain economic manufacture.

US-A-5 609 421 provides compliance or resilience to the bush by making the bush of non-round cross section when viewed in the axial direction. The bush described is of slightly triangular form, the sides being curved so that the outer surface of the bush backing essentially contacts the round housing bore at three positions. Similarly, the hinge pin also only contacts the bore of the inserted bush at three positions which are rotationally angularly offset from the positions of contact of the bush outer diameter and housing bore. Thus, The bearing wall portions opposite the lines of contact with the hinge pin are able to deform elastically in response to side loads. However, it is believed that this design may allow too much drooping of an open door although the bearing is nominally acting as a zero clearance bearing. A further disadvantage of this type of bush is that contact between the hinge pin and bearing surface is only at three line contacts thus, bearing wear of the plastic lining material may be more rapid than desired.

Thus, it is an object of the present invention to provide a zero clearance bearing without the disadvantages of the prior art bearings.

US-A-5611628 discloses annular bearings apparently formed from a single resilient material. In one embodiment a radial bearing is provided, e.g. for a rotatable valve stem or spindle. The bearing has radially extending peaks and valleys and exerts a spring force against the valve stem to stabilise it and reduce wobble.

DE-U-86 19 907.2 relates to a rotary joint for a lamp including a radial bearing element having inner and outer parallel axial grooves. The bearing element is again apparently formed from a single material.

US-A-4795220 concerns a thrust bearing formed by stamping an annular metallic plate having a bearing alloy layer, to form a plurality of recesses and projections extending in the axial (thickness) direction of the annular bearing.

According to the present invention, there is provided a bearing, the bearing being of generally cylindrical form and being formed from a material comprising a strong backing material having thereon a lining of a bearing material, wherein the wall thickness has corrugations provided therein, and the bearing material living comprises a plastics material.

The corrugations may be formed by plastic deformation of a flat sheet or strip of the backed bearing material, the corrugations extending through the wall thickness. The overall wall thickness is thus greater than the thickness of the strip from which the corrugated material is formed.

As noted above, the corrugations may be formed in the flat strip from which bearing blanks are cut prior to forming into a bearing. Alternatively, the corrugations may be formed in the steel backed material during the processing into bearings, i.e. the corrugations may be incorporated into a bearing blank during the bearing bush forming operation.

The corrugations, which appear visually as grooves and ridges on both outer surfaces of the flat strip material, may extend in a direction substantially parallel to the bearing axis and/or transversely thereto and/or obliquely thereto. Thus, a bearing according to the present invention may have corrugations extending in more than one direction.

One important advantage of the bearing according to the present invention is that the conventional technique of burnishing the bearing may be omitted. As explained above, burnishing is a technique for producing an accurate bore size in the bearing and is effected by pushing a tool having a rounded shaped portion, the rounded portion being of a greater diameter than that of the bearing bore when fitted in its housing, through the bore of the bearing. The burnishing step causes deformation in the bearing material structure and in extreme cases can weaken the bond between the bearing lining and the backing material. Burnishing is an expensive additional step in bearing production and which may be avoided with bearings according to the present invention.

In the present invention because of the greater ability of the bearing wall thickness to accommodate a greater degree of deformation, the burnishing step may be omitted and the correct zero-clearance fit achieved by merely inserting a hinge pin of suitable size. The diameter of the hinge pin is chosen so as to effect the necessary sizing of the bearing bore. However, the correct size for the hinge pin encompasses a relatively wide tolerance range within which the diameter of the hinge pin would normally fall as result of conventional pin manufacturing techniques. Plastic deformation of the bush achieved by insertion of the hinge pin may be of the order of 20%.

In order that the present invention may be more fully understood, examples will now be described by way of illustration only with reference to the accompanying drawings, of which:
Figure 1 shows a perspective end view of a bearing according to a first embodiment of the present invention;
Figure 2 shows a schematic cross section through a hinge assembly of a vehicle door;
Figure 3 shows a cross section through a piece of corrugated strip prior to bearing formation and giving typical dimensions for the structural features thereof;
Figure 4 shows a cross section through tools for forming sheet prior to forming bearings according to the present invention;
Figure 5 shows a schematic perspective view of flat sheet or strip formed into corrugated sheet or strip by the tools of Figure 4;
Figure 6 shows a cross section of part of the housing, bearing and hinge pin on the line 6-6 of Figure 2; and
Figure 7 which shows an axially directed cross section through a second embodiment of a bearing according to the present invention wherein the corrugations are in the circumferential direction.

Referring now to the drawings and where the same features are denoted by common reference numerals.

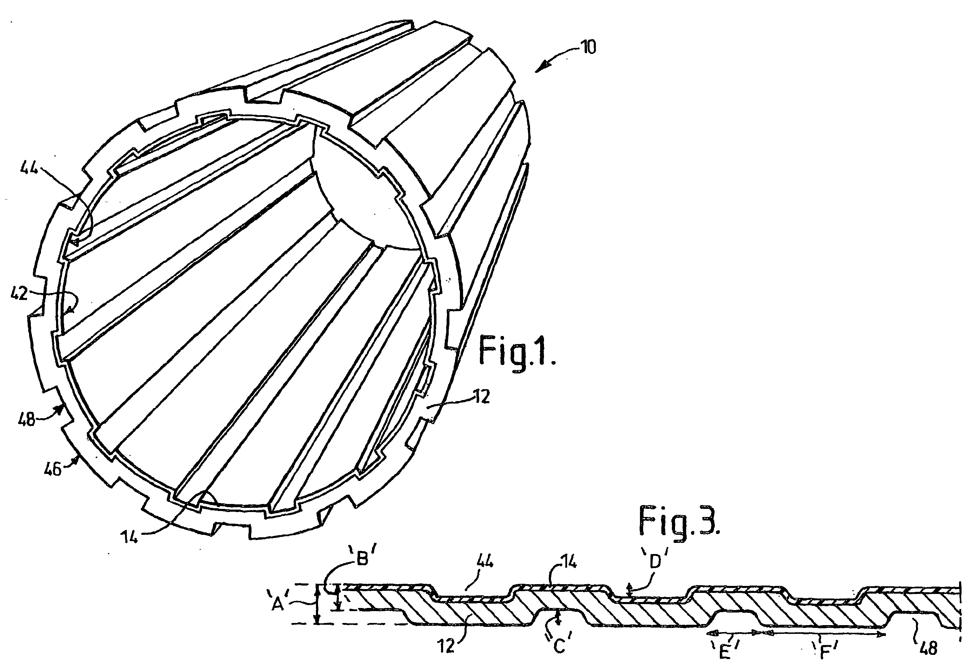

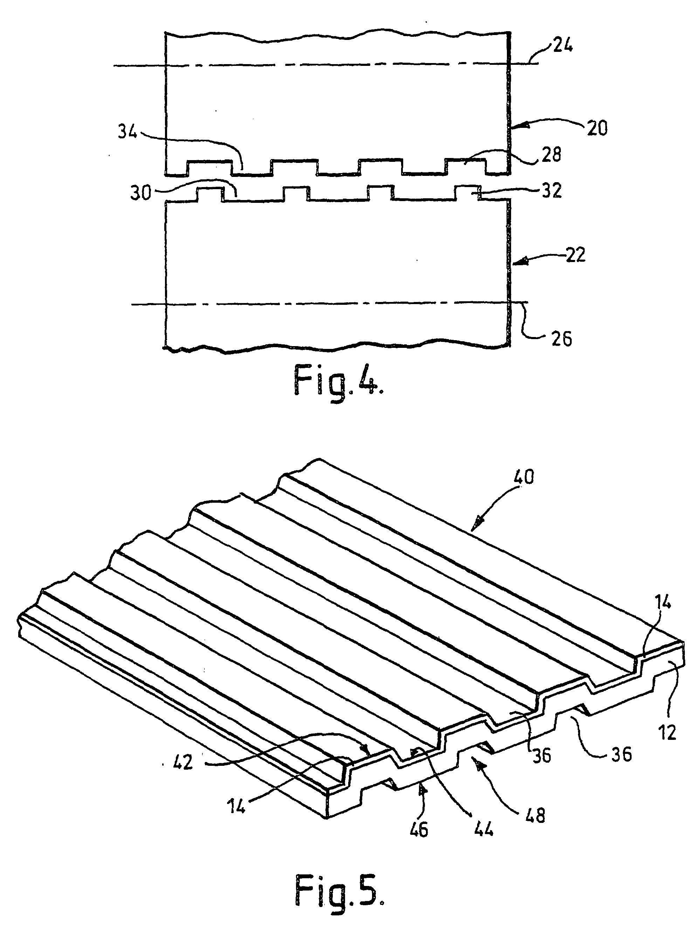

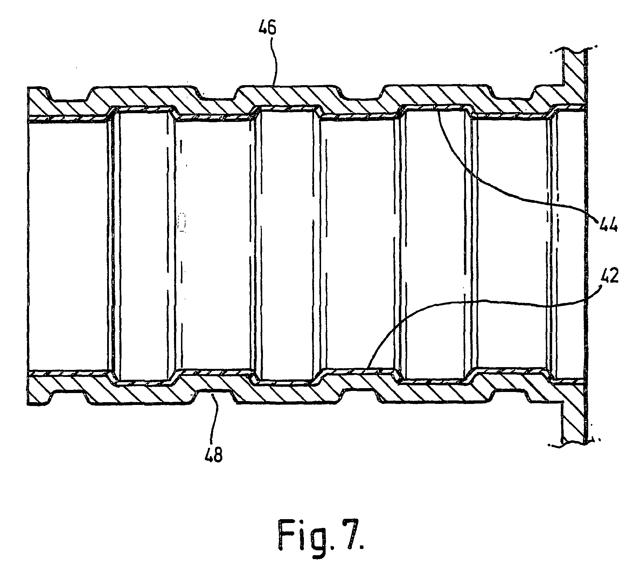

Figure 1 shows a perspective view of a bearing bush 10 according to the present invention. The bush is made from flat strip material (not shown) having a steel backing 12 and a plastics lining material 14 bonded to one side thereof. The flat strip material is passed between rolls 20, 22 (see Figure 4) to form corrugated material 40 (see Figures 5 and 6). The rolls 20, 22 rotate about axes 24, 26 respectively and have co-operating grooves 28, 30 and projecting ridges 32, 34, the projecting ridges of one roll being able to be accommodated within the grooves of the other roll. As the rollers are brought closer together, input flat strip is deformed so as to receive corrugations 36 which extend through the wall thickness thereof. Thus, the corrugated strip 40 comprises raised ridges 42 having the lining 14 thereon, each ridge 42 being separated from the next by grooves 44. The back of the corrugated material 40 comprises raised steel ridges 46, each ridge 46 being separated from the next by a groove 48. Consequently, the bearing 10 wrapped from the corrugated strip 40 also has corresponding raised ridges 42, 46 and grooves 44, 48.

The bearing 10 shown in Figure 1 has been formed from a blank which has been cut from the corrugated strip 40 having the corrugations extending in a direction parallel to the axis of the bearing to be formed from the blank. However, the blank may be cut at right angles so that the corrugations in the wrapped bearing bush extend in a direction around the circumference of the bearing 10, i.e. extend circumferentially with respect to the bearing axis as shown with reference to Figure 7 which shows a flanged bush according to the present invention with the flange only partially shown. In another embodiment the blank may be cut such that the corrugations extend helically along the axial length of the wrapped bearing bush.

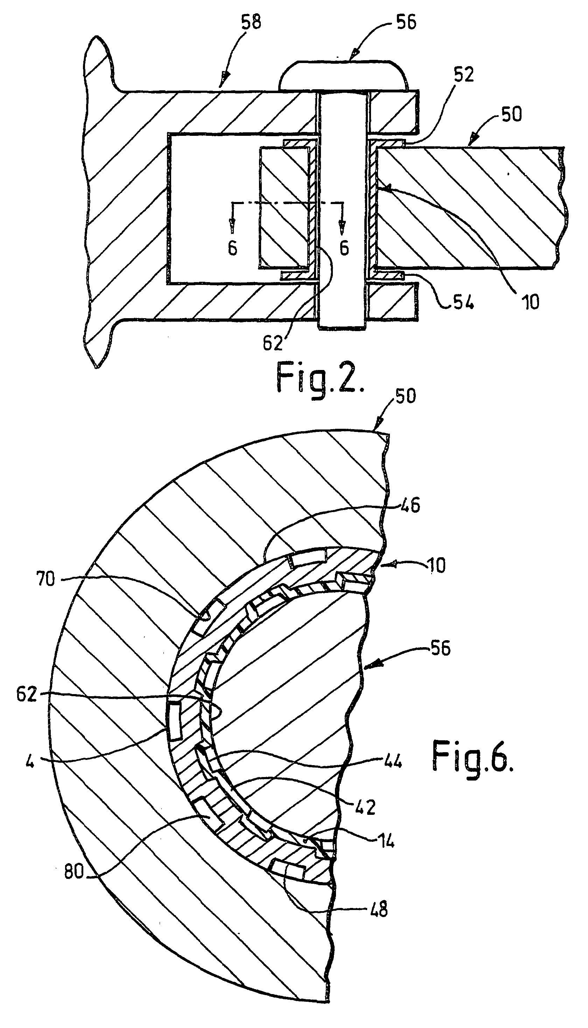

The door hinge assembly shown in Figure 2 comprises a bearing housing portion 50 fixed to a vehicle door (not shown), the housing receiving and supporting a bearing 10 which, in this case, has a flange 52 initially at one end and has a second flange 54 formed after fitting to the housing portion 50. A hinge pin 56 support portion 58 is provided and which is fixed to the vehicle body (not shown). After the bearing 10 is fitted to the housing portion 50 the hinge pin 56 is pushed into the bore of the bearing 10 so as to create a uniform bore size in all of the bearings fitted to a plurality of vehicle doors. The hinge pin 56 is of sufficient diameter to cause plastic deformation of the bearing bush 10 and to cause the ridges 46 on the bearing back to contact the housing bore and also to ensure that the outer diameter of the hinge pin 56 is supported by the lining material 14 on the internal ridges 42.

The effect of pushing the hinge pin 56 into the bearing bore 62 is to deform the wall of the bearing and to cause the outer surfaces of the ridges 46 to contact the bore 70 of the housing portion 50. Due to the natural spring-back of the bearing material a zero-clearance bearing is formed. The bearing 10 because of the corrugated structure of the wall thickness is able to accommodate the whole tolerance range of hinge pins to produce a zero-clearance bearing assembly without either causing excessive deformation at one end of the tolerance spectrum nor a loose fit at the other end of the tolerance spectrum. It is the grooves 44 and 48 which are important in providing a degree of resiliency in allowing flexure of the bearing ridges 42 when the hinge pin 56 is inserted into the bore 62. Thus, the voids 80 formed between the grooves 48 and housing bore 70 permit some movement of the bearing surface without the torque required to open a door hinge from becoming excessive.

It is important to note that the both the surfaces of the ridge 46 on the back of the bearing and the surfaces of the ridges 42 in the bore of the bearing describe arcs of circles with which the running surface of the hinge pin 56 contacts. Thus, although the bearing of the present invention does not have bearing rubbing contact over 360°, it does have considerably more bearing surface contact area than the prior art bearings and thus bearing wear rate may be significantly lower.

The pitch, depth and length of the ridges 42, 46 and grooves 44, 48 may be changed by use of suitably formed tools 20, 22 to form corrugated sheet for the manufacture of bearings having desired degrees of resilience and ease or otherwise of deformation.

Referring to Figure 3 where a section through the corrugated flat strip 40 prior to forming of a bearing is shown, typical dimensions for a bearing as described with reference to Figures 1 and 2 and 7 may be:

| | | |
|---|---|---|
| Total thickness | A | about 1mm |
| Thickness of pre-corrugated flat strip | B | about 0.75mm |
| Depth of grooves | C, D | about 0.25mm |
| Width of grooves | E (44,48) | between about 0.4 and 2mm |
| Width of ridges | F (42,46) | between about 0.8 and 2.5mm |

Tests have shown a slight variation of rotational torque over a wide range of component tolerances and the resistance of the bush to prevent drooping of a car door has proved to be acceptable.

The hinge assembly of Figure 2 may alternatively comprise two bearings 10 each being flanged and inserted from opposite ends of the bore in the hinge member 50.

Although the present invention has been described with reference to vehicle door hinge bearings, bearings according to the present invention are not limited to such applications and may be used in many applications where zero clearance bearings are required.

A further advantage of the present invention is that the grooves of the corrugations in the bearing bore provide reservoirs which may be filled with lubricant such as grease if desired so as to further extend bearing life.

## Claims

1. A bearing (10) the bearing being of generally cylindrical form and being formed from a material comprising a strong backing material (12) having thereon a lining (14) of a bearing material, wherein the wall thickness has corrugations (36) provided therein; and the bearing material lining comprises a plastics material.

2. A bearing (10) according to claim 1 wherein the corrugations (36) are formed by plastic deformation of a sheet or strip of the backed bearing material (12, 14), the corrugations extending through the wall thickness.

3. A bearing (10) according to either claim 1 or claim 2 wherein the corrugations (36) extend in a direction substantially parallel to the bearing axis.

4. A bearing (10) according to either claim 1 or claim 2 wherein the corrugations (36) extend transversely to the bearing axis.

5. A bearing (10) according to either claim 1 or claim 2 wherein the corrugations (36) extend obliquely to the bearing axis.

6. A bearing (10) according to either claim 1 or claim 2 wherein the corrugations (36) extend in more than one direction.

7. A bearing (10) according to claim 2 wherein the initial strip is flat strip and the overall thickness (A) of the corrugated material (40) is greater than the thickness (B) of the flat strip from which the corrugated material is formed.

8. A bearing (10) according to any preceding claim wherein the width of grooves (44) and ridges (42) formed by the corrugations on an outer diameter of the bearing are unequal.

9. A bearing (10) according to any one preceding claim wherein the lining (14) of bearing material is bonded to said backing materials (12) by a porous layer.

10. A bearing (10) according to claim 9 wherein said porous layer is a sintered bronze powder.

11. A bearing (10) according to anyone preceding claim wherein said strong backing material (12) is steel.

12. A hinge assembly including a bearing (10) according to any one of preceding claims 1 to 11.

13. A hinge assembly according to claim 12 wherein the bearing (10) is flanged.

14. A hinge assembly according to either claim 12 or 13 wherein there are two bearings (10) included therein.

## Patentansprüche

1. Lager (10), welches eine im Wesentlichen zylindrische Form aufweist und aus einem Material ausgebildet ist, das ein starkes Stützmaterial (12) mit einer darauf angeordneten Auskleidung (14) eines Lagermaterials umfasst, wobei die Wanddicke darin vorgesehene Riffelungen (36) aufweist und das Lagerauskleidungsmaterial ein Kunststoffrnaterial umfasst.

2. Lager (10) nach Anspruch 1, wobei die Riffelungen (36) durch plastische Verformung eines Blechs oder Bands des Lagestützmaterials (12, 14) ausgebildet werden und durch die Wanddicke hindurch verlaufen.

3. Lager (10) nach Anspruch 1 oder 2, wobei die Riffelungen (36) in eine im Wesentlichen parallel zur Lagerachse liegende Richtung verlaufen.

4. Lager (10) nach Anspruch 1 oder 2, wobei die Riffelungen (36) quer zur Lagerachse verlaufen.

5. Lager (10) nach Anspruch 1 oder 2, wobei die Riffelungen (36) schräg zur Lagerachse verlaufen.

6. Lager (10) nach Anspruch 1 oder 2, wobei die Riffelungen (36) in mehr als eine Richtung verlaufen.

7. Lager (10) nach Anspruch 2, wobei das Ausgangsband ein Flachband ist und die Gesamtdicke (A) des geriffelten Materials (40) größer als die Dicke (B) des Flachbands ist, aus dem das geriffelte Material ausgebildet ist.

8. Lager (10) nach einem der vorhergehenden Ansprüche, wobei die Breite der durch die Riffelungen auf einem Außendurchmesser des Lagers gebildeten Nuten (44) und Rippen (42) ungleich ist.

9. Lager (10) nach einem der vorhergehenden Ansprüche, wobei das Lagerauskleidungsmaterial (14) auf das Stützmaterial (12) durch eine poröse Schicht gebunden wird.

10. Lager (10) nach Anspruch 9, wobei die poröse Schicht ein gesintertes Bronzepulver ist.

11. Lager (10) nach einem der vorhergehenden Ansprüche, wobei das starke Stützmaterial (12) Stahl ist.

12. Scharnieranordnung, welche ein Lager (10) nach einem der vorhergehenden Ansprüche 1 bis 11 enthält.

13. Schamieranordnung nach Anspruch 12, wobei das Lager (10) geflanscht ist.

14. Scharnieranordnung nach Anspruch 12 oder 13, wobei in dieser zwei Lager (10) enthalten sind.

## Revendications

1. Palier (10), le palier ayant une forme globalement cylindrique et étant réalisé dans un matériau comprenant un matériau de support résistant (12) sur lequel est appliqué un revêtement (14) fait en une matière pour palier, dans lequel l'épaisseur de paroi est pourvue de cannelures (36), et le revêtement fait en une matière pour palier comprend une matière plastique.

2. Palier (10) selon la revendication 1, dans lequel les cannelures (36) sont réalisées par la déformation plastique d'une tôle plate ou d'une bande du matériau de support de palier (12, 14), les cannelures s'étendant à travers l'épaisseur de la paroi.

3. Palier (10) selon la revendication 1 ou la revendication 2, dans lequel les cannelures (36) s'étendent dans une direction sensiblement parallèle à l'axe du palier.

4. Palier (10) selon la revendication 1 ou la revendication 2, dans lequel les cannelures (36) s'étendent transversalement par rapport à l'axe du palier.

5. Palier (10) selon la revendication 1 ou la revendication 2, dans lequel les cannelures (36) s'étendent obliquement par rapport à l'axe du palier.

6. Palier (10) selon la revendication 1 ou la revendication 2, dans lequel les cannelures (36) s'étendent dans plus d'une direction.

7. Palier (10) selon la revendication 2, dans lequel la bande initiale est une bande plate, et l'épaisseur globale (A) du matériau cannelé (40) est plus grande que l'épaisseur (B) de la bande plate à partir de laquelle le matériau cannelé est formé.

8. Palier (10) selon l'une quelconque des revendications précédentes, dans lequel la largeur des rainures (44) et des arêtes (42) formées par les cannelures sur un diamètre extérieur du palier sont inégales.

9. Palier (10) selon l'une quelconque des revendications précédentes, dans lequel le revêtement (14) de matériau pour palier est collé au dit matériau de support (12) par une couche poreuse.

10. Palier (10) selon la revendication 9, dans lequel ladite couche poreuse est une poudre de bronze frittée.

11. Palier (10) selon l'une quelconque des revendications précédentes, dans lequel ledit matériau de support résistant (12) est de l'acier.

12. Assemblage de charnière comprenant un palier (10) selon l'une quelconque des revendications précédentes 1 à 11.

13. Assemblage de charnière selon la revendication 12, dans lequel le palier (10) comporte un rebord.

14. Assemblage de charnière selon les revendications 12 ou 13, dans lequel deux paliers (10) sont inclus dans celui-ci.
